# EUROPEAN PATENT APPLICATION

(11) **EP 2 882 200 A1**
(43) Date of publication of application: **10.06.2015**
(21) Application number: 14175773.2
(22) Date of filing: 04.07.2014
(51) Int. Cl.: H04N 21/61, H04N 21/2343, H04N 21/262, H04N 21/845, H04N 21/658, H04N 21/647, H04N 21/442

(54) **Display apparatus and method of displaying an image being divided into a plurality of regions**

(30) Priority: 04.12.2013 KR 20130150164
(71) Applicant: Samsung Electronics Co., Ltd, Gyeonggi-do 443-742 (KR)
(72) Inventor: Kang, Chun-un, Seoul (KR); Km, Jeong-gon, Gyeonggi-do (KR); Lee, Dae-hyun, Gyeonggi-do (KR)
(74) Representative: Appleyard Lees

(57) **Abstract**

A method of displaying an image of a display apparatus which receives multimedia data from a server apparatus, and provides streaming service is provided. The method includes receiving a plurality of portions of multimedia data divided into a plurality of screen regions from the server apparatus, decoding the plurality of portions of received multimedia data, and displaying the plurality of portions of decoded multimedia data in one screen. The plurality of portions of multimedia data divided into the plurality of screen regions are compressed with different compression rates.

## Description

### BACKGROUND

### 1. Field

Apparatuses and methods consistent with exemplary embodiments relate to a display apparatus, a method of displaying an image thereof, and a computer-readable recording medium. More particularly, apparatuses and methods consistent with exemplary embodiments relate to a display apparatus which divides multimedia data into a plurality of screen regions, compresses a plurality of portions of divided multimedia data with different compression rates, and receives the compressed multimedia data, a method of displaying an image thereof, and a computer-readable recording medium.

### 2. Description of the Related Art

In recent years, with development of a variety of image-related technologies, super-high definition images supporting ultra-high definition (UHD) resolution may be provided beyond a typical high-definition (HD) resolution (e.g., 1920x1080).

When an image supporting a UHD resolution is provided via a streaming service, a higher network bandwidth is required compared to streaming a general HD-quality image. The term "streaming" may refer to a method which reproduces a file such as an image, sound, or animation on the Internet in real time while the file is being received.

When streaming is performed, a client side which receives data transmits the received data to an application program to convert the data into sound or a picture in real time.

A network bandwidth of about 20 Mbps is generally needed to provide an HD-quality image streaming service when compression is not performed. The required network bandwidth may vary according to a data compression rate. When network bandwidth used by a client is insufficient, image playback may not be smooth.

In contrast, a transmission rate of from 80 Mbps to 300 Mbps may be needed to provide a smooth streaming service with respect to playback of an image having a UHD resolution when compression is not performed. The transmission rate may vary according to a data compression rate. Therefore, when a network infrastructure is insufficient, a UHD streaming service may not be capable of providing smooth reproduction similar to a HD-quality streaming service.

### SUMMARY

According to the present invention there is provided an apparatus and method as set forth in the appended claims. Other features of the invention will be apparent from the dependent claims, and the description which follows.

One or more exemplary embodiments provide a device, method, and computer-readable recording medium which receive data from a server apparatus and provide a streaming service.

According to an aspect of one or more exemplary embodiments, there is provided a display apparatus capable of providing streaming service with respect to multimedia data of UHD-quality by dividing a large amount of multimedia data into a plurality of screen regions and transmitting the plurality of portions of divided multimedia data with different compression rates according to characteristics of the divided screen regions even when a network infrastructure is insufficient, a method of displaying an image thereof, and a computer-readable recording medium.

According to an aspect of one or more exemplary embodiments, there is provided a method of displaying an image. The method may include: receiving a plurality of portions of data, each portion of data being divided into a plurality of regions; decoding the plurality of portions of received data; and displaying the plurality of portions of decoded data in one screen. Each of the plurality of portions of data divided into the plurality of regions may be compressed at different compression rates corresponding to a screen characteristic of each of the regions of each respective portion of data.

The data may be divided into a region in which a screen change per unit time is equal to or larger than a threshold, and a region in which a screen change per unit time is less than the threshold.

A compression rate of data corresponding to a screen region in which the screen change is equal to or larger than the threshold is smaller than that of data corresponding to the region in which the screen change may be less than the threshold.

The method may further include measuring a bandwidth of a network connected to a server apparatus; and transmitting the measured bandwidth to the server apparatus.

The method may further include measuring the bandwidth of the network at preset time intervals; and transmitting a changed bandwidth value to the server apparatus when the bandwidth of the network is changed.

A number of the plurality of regions may be changed according to a resolution of the data.

The method may further include receiving a manifest file from a server apparatus; and displaying the plurality of portions of data divided into the plurality of regions in one screen using the received manifest file.

According to an aspect of one or more exemplary embodiments, there is provided a display apparatus. The display apparatus may include: a communication unit configured to receive a plurality of portions of data divided into a plurality of regions; a decoder configured to decode the plurality of portions of received data; and a controller configured to display the plurality of portions of decoded data in one screen. The plurality of portions of multimedia data divided into the plurality of regions may be compressed at a rate corresponding to a screen characteristic of each of the regions of each portion of data.

The data may be divided into a region in which a screen change per unit time is equal to or larger than a threshold, and a screen region in which a screen change per unit time is less than the threshold.

A compression rate of data corresponding to a screen region in which the screen change is equal to or larger than the threshold may be smaller than that of data corresponding to a screen region in which the screen change is less than the threshold.

The controller may measure a bandwidth of a network connected to a server apparatus, and transmits the measured bandwidth of the network to the server apparatus.

The controller may measure the bandwidth of the network at preset time intervals, and transmit a changed bandwidth value of the network to the server apparatus.

A number of the plurality of screen regions may be changed according to a resolution of the data.

The communication unit may receive a manifest file from a server apparatus, and the controller may display the plurality of portions of data divided into the plurality of regions in one screen based on the received manifest file.

According to an aspect of an exemplary embodiment, there is provided a computer-readable recording medium including a program for executing a method of displaying an image. The method may include: receiving a plurality of portions of data divided into a plurality of regions; decoding the plurality of portions of received data; and displaying the plurality of portions of decoded data in one screen. The plurality of portions of data divided into the plurality of screen regions may be compressed at a compression rate corresponding to a screen characteristic of each of the regions of each respective portion of data.

According to an aspect of an exemplary embodiment, there is provided a method of providing a streaming service. The method of providing a streaming service may include dividing content into portions according to a time period, associating a plurality of regions with each portion, maximizing a compression rate of each portion according to a display characteristic of each region of each portion, transmitting content comprising compressed portions, and decoding and displaying the transmitted content.

A display characteristic of each region of each portion may be a screen change per unit time, and content may be divided into the plurality of regions based on whether a screen change per unit time of each of the plurality of regions exceeds a threshold value.

The method may include specifying information corresponding to the content and locations of the portions in a file and providing the file to a requestor.

A bandwidth of a network connected to a server apparatus may be measured and transmitted to the server apparatus.

Measuring the bandwidth of the network may occur at preset time intervals, and a changed bandwidth value of the network may be transmitted to the server apparatus.

According to an aspect of an exemplary embodiment, there is provided a method of displaying an image, including receiving an encoded multimedia image, the encoded multimedia image divided into a first image region that is a first portion of the multimedia image and a second image region that is a second portion of the multimedia image, and decoding the first image region and the second image region of the encoded multimedia image to reconstruct an original multimedia image of the encoded multimedia image, displaying the original image; wherein the first image region of the encoded multimedia image is compressed at a first compression and the second image region of the encoded multimedia image is compressed at a second compression.

According to the above-described various exemplary embodiments, streaming service may be smoothly provided even when a network infrastructure is insufficient, and a display apparatus which receives multimedia data and provides a streaming service may also efficiently manage and process a large amount of UHD-quality multimedia data.

Additional aspects and advantages of the exemplary embodiments will be set forth in the detailed description, will be obvious from the detailed description, or may be learned by practicing the exemplary embodiments.

### BRIEF DESCRIPTION OF THE DRAWINGS

For a better understanding of the invention, and to show how embodiments of the same may be carried into effect, reference will now be made, by way of example, to the accompanying diagrammatic drawings in which:
FIG. 1 is a block diagram illustrating a display apparatus according to an exemplary embodiment;
FIGS. 2 and 3 are views showing operations of dividing multimedia data into a plurality of screen regions, and receiving the divided multimedia data according to an exemplary embodiment;
FIG. 4 is a view showing an operation of asymmetrically dividing a screen, and receiving multimedia data according to an exemplary embodiment;
FIG. 5 is a view showing a method of dividing a screen region according to screen change according to an exemplary embodiment;
FIG. 6 is a view illustrating multimedia data pre-stored in a server apparatus according to an exemplary embodiment;
FIG. 7 is a view illustrating a manifest file according to an exemplary embodiment;
FIG. 8 is a view illustrating a server apparatus which stores a plurality of pieces of multimedia data having the same content information and different image qualities according to an exemplary embodiment; and
FIG. 9 is a flowchart illustrating a method of displaying an image of a display apparatus which receives multimedia data and provides streaming service according to an exemplary embodiment.

### DETAILED DESCRIPTION OF EXEMPLARY EMBODIMENTS

Hereinafter, exemplary embodiments will be described more fully, examples of which are illustrated in the accompanying drawings.

In the following description, the same reference numerals are used for the same elements when they are depicted in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, functions or elements known in the related art are not described in detail since they would obscure the exemplary embodiments with unnecessary detail.

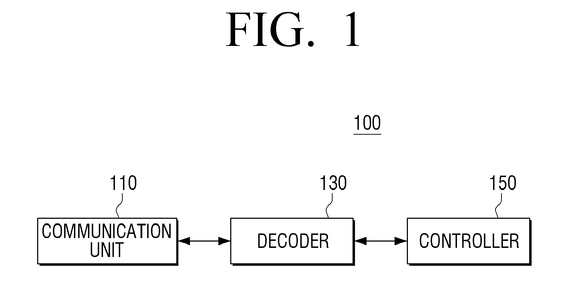

FIG. 1 is a block diagram illustrating a display apparatus 100 according to an exemplary embodiment.

Referring to FIG. 1, the display apparatus 100 may include a communication unit 110, a decoder 130, and a controller 150. Components related to the exemplary embodiment are illustrated in the display apparatus 100 of FIG. 1. Therefore, those skilled in the related art of the exemplary embodiment may understood that general-purpose components may be further included in addition to the components illustrated in FIG. 1.

Hereinafter, the display apparatus 100 illustrated in FIG. 1 may be configured as various types of apparatuses which may perform a display function, such as a television (TV), a portable phone, a personal digital assistant (PDA), a laptop personal computer (PC), a tablet PC, a PC, a smart monitor, an electronic photo frame, an electronic book, an MP3 player, or the like. A detailed configuration thereof may be modified according to exemplary embodiments.

The communication unit 110 may receive a plurality of portions of multimedia data divided into a plurality of screen regions from a server apparatus. The multimedia data may include data such as text, voice, image content, or the like, corresponding to content selected by a user.

For example, when multimedia data is image content supporting 4K UHD resolution (e.g., 3840x1920), the multimedia data may be divided into four screen regions, and the communication unit 110 may receive four pieces of multimedia data divided into the four screen regions.

The communication unit 110 may, for example, receive multimedia data in which one screen is equally divided into four or may receive multimedia data in which one screen is asymmetrically divided according to a screen characteristic. When multimedia data supporting a high-capacity UHD resolution is divided into a plurality of screen regions, a streaming service may be smoothly provided even when the network infrastructure is insufficient to smoothly stream undivided high-capacity multimedia data, and high-capacity multimedia data may be efficiently managed, based on an increased compression rate of each of the plurality of pieces of multimedia data.

The decoder 130 may decode portions of multimedia data received through the communication unit 110. Specifically, the decoder 130 may restore encoded multimedia data to its original form using a digital code used to transmit the multimedia data.

The controller 150 may integrate a plurality of portions of decoded multimedia data and display integrated multimedia data in one screen. Because multimedia data received from the server apparatus may be divided into a plurality of screen regions, portions of divided multimedia data may be integrated and arranged to display multimedia data to a user.

Specifically, before the controller 150 receives multimedia data, the controller 150 may receive a manifest file from a server apparatus, integrate a multimedia data divided into a plurality of screen regions into one screen using the received manifest file, and display the integrated multimedia data. The manifest file may include information necessary for integrating the multimedia data divided plurality of screen regions into one screen. For example, the manifest file may include information corresponding to a plurality of screen regions of the multimedia data.

Alternatively, the manifest file may include information regarding whether multimedia data is divided into screen regions, whether a running time of the multimedia data is specified, whether location information regarding divided multimedia data storage in the server apparatus is provided, or the like.

As described above, when high-capacity UHD-quality multimedia data is divided into a plurality of screen regions, the display apparatus 100 may be configured to efficiently manage and process the multimedia data.

Specifically, dividing multimedia data into a plurality of screen regions, decoding the plurality of portions of divided multimedia data, integrating the plurality of portions of decoded multimedia data into one screen, and displaying the integrated multimedia data may be more efficient than decoding all high-capacity multimedia data at the same time and outputting the decoded multimedia data to a screen.

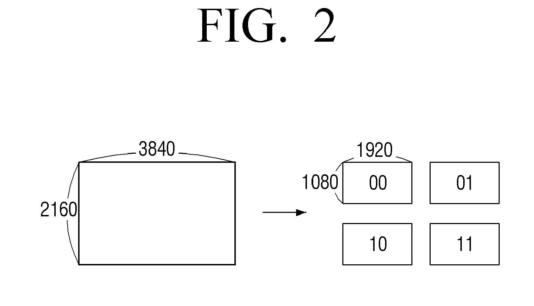

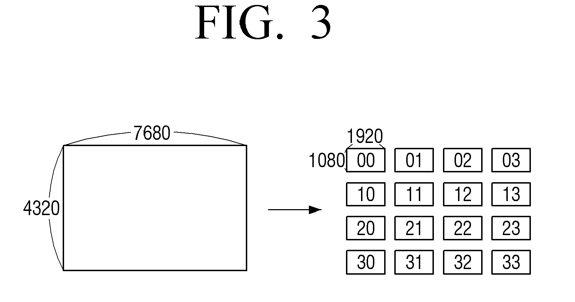

FIGS. 2 and 3 are views showing operations of dividing multimedia data into a plurality of screen regions according to exemplary embodiments.

Specifically, FIG. 2 shows an operation of dividing multimedia data supporting 4K UHD resolution (e.g., 3840x2160). In an exemplary embodiment shown in FIG. 2, multimedia data is equally divided into four screen regions (e.g., each equally divided screen region being 1920x1080). However, multimedia data may be divided into screen regions larger than or smaller than four and/or multimedia data may be asymmetrically divided.

The communication unit 130 may sequentially receive a plurality of portions of multimedia data divided into a plurality of screen regions. Alternatively, when a plurality of communication interface units configured to receive multimedia data are provided, the communication unit 130 may receive the plurality of portions of multimedia data in parallel through the communication interface units.

FIG. 3 is a view showing an operation of dividing multimedia data supporting 8K UHD resolution. For example, FIG. 3 shows 7680x4320 8K UHD multimedia data equally divided into sixteen 1920x1080 screen regions. However, the multimedia data may be asymmetrically divided according to characteristics of the screen regions.

For example, because a region having a large screen change per unit time and a region having a small screen change per unit time may be included in one frame, multimedia data may be divided into a region having large screen change and a region having a small screen change.

Since a compression rate of a region having small screen change is larger than that of a region having large screen change, an amount of data transmitted from the server apparatus may be substantially reduced. Therefore, a streaming service may be provided with a UHD-quality image even when the network infrastructure is insufficient to smoothly stream undivided high-capacity multimedia data.

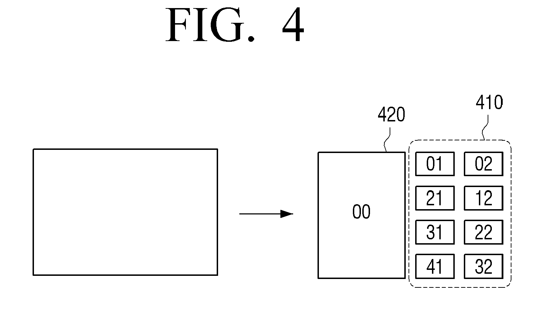

FIG. 4 is a view showing an operation of asymmetrically dividing a screen according to an exemplary embodiment.

One screen may include a region having a large screen change per unit time and a region having a small change per unit time. When multimedia data is divided into the large screen change per unit time region and the small screen change per unit time region, a compression rate may be increased compared to an embodiment in which the screen regions are equally divided regardless of an amount of screen change per unit time.

Specifically, as illustrated in FIG. 4, to maximize a compression rate, multimedia data may be divided into a region 410 in which screen change per unit time is large and a region 420 in which the screen change per unit time is small. At this time, the region 410 having a large screen change per unit time may be more finely divided than the region 420 having small screen change.

As described above, when a screen is divided according to characteristics of the screen regions according to screen change per unit time, a compression rate of transmitted multimedia data may be increased and an amount of data transmitted from the server apparatus may be reduced.

Further, when the multimedia data is received, decoded, and displayed in one screen region, high-capacity data may be efficiently processed.

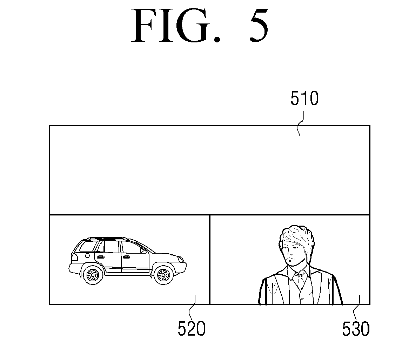

FIG. 5 is a view explaining a method of dividing a screen region according to screen change according to an exemplary embodiment.

One screen may include a region having a large screen change per unit time and a region having a small screen change per unit time. A screen change per unit time may be measured according to a degree of change associated with a pixel over time. For example, one screen may be divided into a background region 510 in which screen change is small, and regions 520 and 530 in which screen change is large.

Since the background region 510 has a small screen change over time, pixels in the background region may display a uniform image. In the region 520 having a large screen change, an image represented by pixels may change over time.

The multimedia data according to an exemplary embodiment may be divided into regions 520 and 530 having a large screen change and background region 510 having a small screen change. Because the background region 510 may be compressed with a high compression rate compared to regions 520 and 530 having large screen change, an amount of transmitted data may be reduced compared to multimedia data that is not divided into screen regions. Further, a region having a large screen change may be more finely divided. Therefore, a display apparatus configured to receive finely divided multimedia data may more efficiently process the multimedia data as compared to non-divided high-capacity multimedia data.

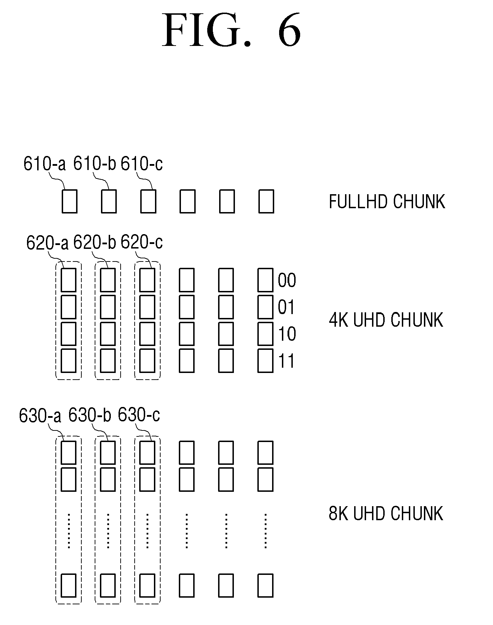

FIG. 6 is a view illustrating multimedia data pre-stored in a server apparatus according to an exemplary embodiment.

The server apparatus may store a same content in the form of a plurality of portions of multimedia data having different image qualities. For example, a movie file "A" may be stored in HD-quality, Full HD-quality, 4K UHD-quality, and 8K UHD-quality. Further, each divided multimedia data may be divided into preset time units and stored.

The multimedia data divided into preset time units may be referred to as a chunk file, and the chunk file may be divided per 10 seconds. For example, as illustrated in FIG. 6, full HD-quality multimedia data may be divided and stored as image data 610-a of 1 to 10 seconds, image data 610-b of 11 to 20 seconds, and image data 610-c of 21 to 30 seconds on the basis of a reproduction time. Similarly, multimedia data supporting 4K UHD resolution may be divided at intervals of 10 seconds and divided image data (620-a, 620-b, 620-c, ...). Further, multimedia data supporting 4K UHD resolution may be further divided into a preset number of screen regions. That is, for example, a total of four files may be transmitted to provide streaming service with respect to seconds 1 to 10 of the multimedia data in the exemplary embodiment shown in FIG. 6.

Similarly, 8K UHD multimedia data supporting a higher resolution than the 4K UHD resolution may be also divided at intervals of 10 seconds, and the temporally divided multimedia data may be further divided according to a preset number of screen regions, and then stored (e.g., as divided image data 630-a, 630-b, 630-c, ...). Therefore, all files divided into sixteen screen regions may be transmitted to provide a streaming service with the 8K UHD multimedia data with respect to the image data between 1 to 10 seconds.

A display apparatus 100 located at a client side may measure a network bandwidth at preset time intervals, and may allow multimedia data having a resolution and bit rate which does not exceed the network bandwidth to be received.

For example, when providing a streaming service for specific content, there may be spare network bandwidth during seconds 1 to 10 of a reproduction period, and thus multimedia data supporting 4K UHD-quality may be transmitted. Thereafter, when a measured network bandwidth is reduced, multimedia data supporting Full HD-quality having a smaller file size may be transmitted to provide a smooth streaming service.

That is, 4K UHD-quality multimedia data may be transmitted between 1 to 10 seconds of a reproduction time, and Full HD-quality multimedia data may be transmitted between 11 to 20 seconds on the basis of the reproduction time. At this time, 4K UHD-quality multimedia data or 8K UHD-quality multimedia data supporting high image quality may be divided into a plurality of screen regions according to a size of a chunk file (e.g., a file divided per 10 second unit), and transmitted.

Further, multimedia data divided into a plurality of screen regions may be compressed using different compression rates according to a screen characteristic (e.g., different compression rates according to characteristics of the divided screen regions). When a chunk file is divided into a plurality of screen regions, a compression rate may be increased compared to when multimedia data is transmitted as one chunk file, and thus an amount of transmitted data may be reduced. Accordingly, a display apparatus may be configured to receive divided multimedia data and may efficiently manage high-capacity multimedia data.

Information included in a manifest file may be used to integrate multimedia data divided into a plurality of screen regions and to display the original screen.

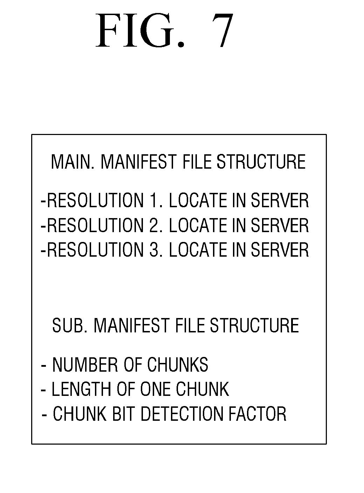

FIG. 7 is a view illustrating a manifest file according to an exemplary embodiment.

A manifest file may be a file received when a display apparatus 100 first accesses a server apparatus in which the multimedia data is stored to receive a streaming service. The manifest file may include information associated with locations where multimedia data is stored according to a resolution.

The display apparatus 100 may measure a network bandwidth at preset time intervals and transmit a result to the server apparatus. The server apparatus may select multimedia data having a best image quality within a range not exceeding the measured network bandwidth, and provide a streaming service to the display apparatus 100.

The network bandwidth may be measured by the display apparatus 100 at preset time intervals, and multimedia data having different resolution may be selected according to bandwidth changes in real time. For example, when the number of clients connected to the network is small, since there is a spare network bandwidth, high image quality multimedia data may be selected. When a number of clients is increased and there is no spare network bandwidth, low image quality multimedia data may be selected.

At this time, the display apparatus 100 may acquire location information associated with portions of multimedia data having different resolutions based on information included in a manifest file received when the display apparatus 100 first accesses the server apparatus. The display apparatus 100 may receive multimedia data having a specific resolution using the manifest file.

A storage location of a multimedia file as well as information associated with a chunk file divided at preset time intervals may be included in the manifest file.

For example, the manifest file may include information regarding whether multimedia data for providing streaming service with respect to one piece of content is formed as chunks, a length of one chunk, a chunk bit detection factor, or the like.

The manifest file may include information necessary for integrating multimedia data divided into a plurality of screen regions into one screen and displaying the multimedia data in the one screen, that is, information regarding whether specific multimedia data corresponds to a screen region.

In an exemplary embodiment, the manifest file may be received when the display apparatus 100 accesses the server apparatus. However, a main manifest file including only a location in a server in which multimedia data is stored according to a resolution may be received first, and a sub manifest file including information associated with a chunk file may be transmitted when the multimedia data is substantially transmitted.

As described above, to measure network bandwidth at preset time intervals and provide streaming service with the best image quality which does not exceed network bandwidth, a same content may be stored in the server apparatus in the form of a plurality of portions of multimedia data having different image qualities.

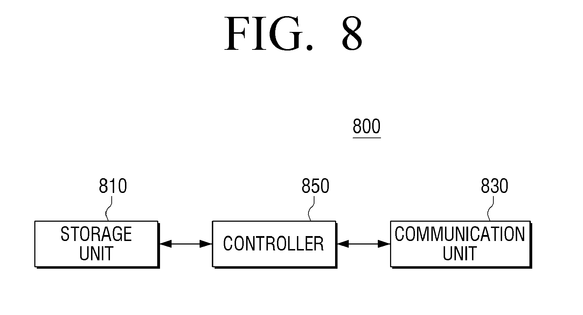

FIG. 8 is a view illustrating a server apparatus 800 configured to store a plurality of portions of multimedia data of which content information is the same and image qualities are different.

Referring to FIG. 8, a server apparatus 800 may include a storage unit 810, a communication unit 830, and a controller 850.

The storage unit 810 may store a plurality of portions of multimedia data of which information of portions of content is the same and resolutions are different, and a manifest file.

At this time, multimedia data may be divided according to a preset time unit, and each of the portions of multimedia file divided per preset time unit may be further divided into a plurality of screen regions and stored.

For example, when a streaming service is provided with respect to a movie file "A" having a running time of 60 minutes, the movie file "A" may be stored as three files: one having Full HD resolution (e.g., 1920x1080), one having 4K UHD resolution (e.g., 3840x2160), and one having 8K UHD resolution (e.g., 7680x4320). Each of the movie files having different resolutions may be divided according to an interval of 1 minute and thus stored in 60 chunk files.

Each chunk file may be further divided into a preset number of screen regions, and stored. When a preset number of screen regions is four, each of the chunk files divided at intervals of 1 minute is further divided into four screen region files, and stored.

Therefore, a file having a corresponding resolution is divided into 240 files (60 files divided at time intervals x four screen region files into which each of the 60 files divided at intervals is further divided), and stored.

That is, the movie file "A" may be stored in a form in which a file of Full HD resolution is divided into 240 files, a form in which a file of 4K UHD resolution is divided into 240 files, and a form in which a file of 8K UHD resolution is divided into 240 files.

An exemplary embodiment where the running time of the movie file is 60 minutes, the preset time unit is 1 minute, and the movie file is divided into four screen regions has been illustrated. However, exemplary embodiments may be implemented such that the movie file may be divided at different time intervals, and divided into different numbers of screen regions.

A manifest file stored in the storage unit 810 may be used to integrate the portions of multimedia data divided into the preset time regions and the plurality of screen regions into one screen.

The manifest file may include information such as locations of files in a server according to a resolution, a number of chunk files, a length of one chunk file, a chunk detection factor, an image index, or the like.

A display apparatus 100 in which multimedia data is divided into preset time regions may be further divided into a plurality of screen regions and the multimedia data may be combined into one screen using a manifest file stored in the storage unit 810 of the server apparatus 800, thereby providing a streaming service to a user.

The communication unit 830 may receive a streaming request and network bandwidth information from the display apparatus 100, and transmit pre-stored multimedia data.

Because network bandwidth information may change according to a situation, the communication unit 830 may receive the network bandwidth information measured at preset time intervals. The received network bandwidth information may be used to select multimedia data having a most suitable resolution for a current network bandwidth situation.

The communication unit 830 may receive a streaming request for a selected multimedia data from a terminal apparatus (e.g., display apparatus 100), and transmit multimedia data corresponding to a current network bandwidth situation to the terminal apparatus.

The controller 850 may select multimedia data according to a current network bandwidth status and control the communication unit 830 to transmit the selected multimedia data to the display apparatus 100.

For example, the controller 850 may determine whether to transmit a movie file "A" stored in the storage unit 810 in Full HD resolution or in 4K or 8K UHD resolution based at least in part on a status of current network bandwidth or a transmission size.

As described above, when high-capacity multimedia data is divided into a plurality of screen regions, since a compression rate of the multimedia data is increased, the streaming service may be provided with respect to high image quality multimedia data even when a network infrastructure is insufficient to smoothly stream undivided high-capacity multimedia data.

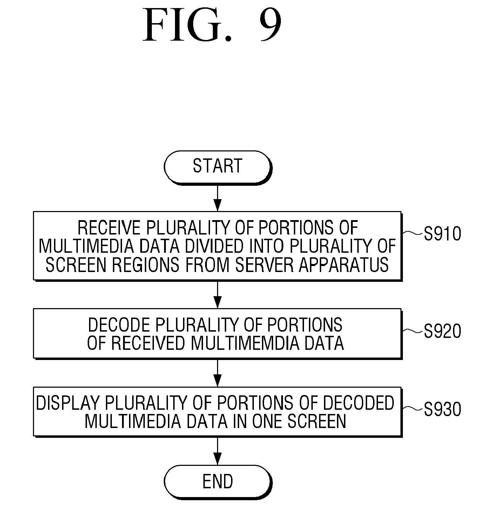

FIG. 9 is a flowchart illustrating a method of displaying an image of a display apparatus which receives multimedia data and providing streaming service according to an exemplary embodiment.

The display apparatus 100 may receive a plurality of portions of multimedia data divided into a plurality of screen regions from the server apparatus 800 (S910). At this time, the multimedia data may be equally divided, or the multimedia data may be asymmetrically divided according to a screen characteristic.

For example, multimedia data may be divided into a region having a large screen change per unit time and a region having a small screen change per unit time according to a threshold (e.g., a preset reference or the like). Since a compression rate when the multimedia data is divided may be greater than a compression rate when the multimedia data is not divided, an amount of transmitted data may be reduced.

The display apparatus 100 may decode the plurality of portions of received multimedia data (S920), and integrate the plurality of portions of decoded multimedia data into one screen for display to an integrated screen (S930).

From the point of view of the display apparatus 100, the method of decoding multimedia data divided into a plurality of screen regions, and displaying the decoded multimedia data in one screen may reduce a time required for processing the multimedia data as compared to a method of decoding high-capacity multimedia data supporting UHD-quality at the same time, and outputting the decoded multimedia data.

A manifest file may be used to integrate a plurality of portions of decoded multimedia data into one screen. The manifest file may include information regarding whether each of the plurality of portions of multimedia data corresponds to a region of the screen, or the like.

The above-described method may be created in a program executable in a computer, and implemented in a general-purpose digital computer which operates the program using a non-transitory computer-readable recording medium. Further, a structure of data used in the above-described method may be recorded through several units in the non-transitory computer-readable recording medium. The non-transitory computer-readable recording medium may include a storage medium such as a magnetic storage medium (for example, a read only memory (ROM), a floppy disc, a hard disc, or the like), and an optically readable medium (for example, a compact disc (CD) ROM, a digital versatile disc (DVD)).

In summary, a method of displaying an image of a display apparatus which receives multimedia data from a server apparatus, and provides streaming service is provided. The method includes receiving a plurality of portions of multimedia data divided into a plurality of screen regions from the server apparatus, decoding the plurality of portions of received multimedia data, and displaying the plurality of portions of decoded multimedia data in one screen. The plurality of portions of multimedia data divided into the plurality of screen regions are compressed with different compression rates.

Although a few preferred embodiments have been shown and described, it will be appreciated by those skilled in the art that various changes and modifications might be made without departing from the scope of the invention, as defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims and drawings), and/or all of the steps of any method or process so disclosed, may be combined in any combination, except combinations where at least some of such features and/or steps are mutually exclusive.

Each feature disclosed in this specification (including any accompanying claims and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims and drawings), or to any novel one, or any novel combination, of the steps of any method or process so disclosed.

## Claims

1. A method of displaying an image, the method comprising:
receiving a plurality of portions of data, each portion of data being divided into a plurality of regions;
decoding the plurality of portions of received data; and
displaying the plurality of portions of decoded data in one screen,
wherein each of the plurality of portions of data divided into the plurality of regions are compressed at a compression rate corresponding to a screen characteristic of each of the regions of each respective portion of data.

2. The method as claimed in claim 1, wherein the data is divided into a region in which a screen change per unit time is equal to or larger than a threshold, and a region in which a screen change per unit time is less than the threshold.

3. The method as claimed in claim 2, wherein a compression rate of data corresponding to a screen region in which the screen change is equal to or larger than the threshold is smaller than that of data corresponding to the region in which the screen change is less than the threshold.

4. The method as claimed in claim 1, further comprising:
measuring a bandwidth of a network connected to a server apparatus; and
transmitting the measured bandwidth to the server apparatus.

5. The method as claimed in claim 4, further comprising:
measuring the bandwidth of the network at preset time intervals; and
transmitting a changed bandwidth value to the server apparatus when the bandwidth of the network is changed.

6. The method as claimed in claim 1, wherein a number of the plurality of regions is changed according to a resolution of the data.

7. The method as claimed in claim 1, further comprising:
receiving a manifest file from a server apparatus; and
displaying the plurality of portions of data divided into the plurality of regions in one screen using the received manifest file.

8. A display apparatus data, comprising:
a communication unit configured to receive a plurality of portions of data divided into a plurality of regions;
a decoder configured to decode the plurality of portions of received data; and
a controller configured to display the plurality of portions of decoded data in one screen,
wherein the plurality of portions of data divided into the plurality of regions are compressed at a rate corresponding to a screen characteristic of each of the regions of each portion of data.

9. The display apparatus as claimed in claim 8, wherein the data is divided into a screen region in which a screen change per unit time is equal to or larger than a threshold, and a screen region in which the screen change per unit time is less than the threshold.

10. The display apparatus as claimed in claim 9, wherein a compression rate of data corresponding to a screen region in which the screen change is equal to or larger than the threshold is smaller than that of data corresponding to the screen region in which the screen change is less than the threshold.

11. The display apparatus as claimed in claim 8, wherein the controller measures a bandwidth of a network connected to a server apparatus, and transmits the measured bandwidth of the network to the server apparatus.

12. The display apparatus as claimed in claim 11, wherein the controller measures the bandwidth of the network at preset time intervals, and transmits a changed bandwidth value of the network to the server apparatus.

13. The display apparatus as claimed in claim 8, wherein a number of the plurality of regions is changed according to a resolution of the data.

14. The display apparatus as claimed in claim 8, wherein the communication unit receives a manifest file from a server apparatus, and the controller displays the plurality of portions of data divided into the plurality of regions in one screen using the received manifest file.
